# FASCICULE DE BREVET EUROPEEN

(11) **EP 0 623 460 B1**
(45) Date de publication et mention de la délivrance du brevet: **25.07.2001**
(21) Numéro de dépôt: 94400939.8
(22) Date de dépôt: 02.05.1994
(51) Int. Cl.: B32B 7/02, B65D 41/04

(54) **Joint composite pour capsules en matière plastique, notamment pour capsules à vis**
Verbunddichtung für Verschlusskappen aus Kunststoff, insbesondere für Schraubverschlusskappen
Composite seal for plastic caps, in particular for screw tops

(30) Priorité: 05.05.1993 FR 9305374
(43) Date de publication de la demande: 09.11.1994
(73) Titulaire: RICAL S.A., 21603 Longvic (FR)
(72) Inventeur: Obadia, Jacques, F-75020 Paris (FR)
(74) Mandataire: Derambure, Christian

(56) Documents cités:
- EP-A- 0 288 972
- EP-A- 0 306 820
- EP-A- 0 530 977
- GB-A- 1 347 883
- LU-A- 66 379
- US-A- 4 361 457
- US-A- 4 846 362

## Description

La présente invention se rapporte à un joint composite pour capsules en matière plastique notamment pour capsules à vis, pour le bouchage de récipients, assurant à la fois l'étanchéité aux liquides et l'imperméabilité aux gaz.

Les matières généralement utilisées pour la réalisation de joints d'étanchéité pour des capsules de bouchage pour bouteilles sont des matières souples relativement perméables aux gaz tels que l'oxygène, le gaz carbonique, l'azote. De même, les matières thermoplastiques utilisées généralement pour le moulage par injection des capsules de bouchage utilisant de tels joints sont relativement perméables aux gaz. De ce fait, la durée de vie des produits conditionnés dans les bouteilles, flacons ou autres récipients obturés par de telles capsules est réduite du fait des échanges gazeux à travers les capsules.

Ces échanges gazeux peuvent par exemple conduire à une pénétration d'oxygène à l'intérieur des récipients, d'où une altération des propriétés organoleptiques de produits sensibles tels que des corps gras de type insaturé. Ils peuvent également entraîner une perte d'arômes des substances aromatiques. Enfin, ces échanges gazeux peuvent provoquer une captation, par le produit contenu dans le récipient, d'odeurs extérieures indésirables liées par exemple à l'environnement de stockage des produits.

Tous ces facteurs de détérioration des propriétés organoleptiques des produits conditionnés militent en faveur d'une amélioration des matériaux à usage de joints pour des capsules, notamment des capsules à vis en matière plastique.

Les divers joints composites utilisés jusqu'à présent pour tenter de combiner d'une part des matières ayant de bonnes propriétés de barrage aux gaz et autres substances volatiles et d'autre part des matières à faible module de rigidité, donc souples et compressibles, possédant de bonnes performances d'étanchéité aux liquides et une aptitude à compenser les irrégularités et tolérances du goulot des récipients, ne donnent pas entière satisfaction.

La présente invention vise par conséquent un joint composite pour capsules en matière plastique, notamment pour capsules à vis, joint qui, tout en étant d'une fabrication simple et d'un coût réduit, répond aux deux exigences contradictoires d'étanchéité aux liquides et d'imperméabilité aux gaz.

Le joint composite objet de la présente invention pour capsules en matière plastique, notamment pour capsules à vis, assurant à la fois l'étanchéité aux liquides et l'imperméabilité aux gaz, comprend un disque à structure multicouche avec au moins une couche médiane en une matière plastique à effet de barrière aux gaz, et deux couches extérieures en matière plastique disposées de part et d'autre de cette couche médiane. Selon l'invention, ledit disque, destiné à être rapporté dans la capsule pour assurer à lui seul l'étanchéité aux liquides et l'imperméabilité aux gaz, comprend de chaque côté d'une couche médiane d'une épaisseur maximale de 250 µm, en une matière plastique ayant un haut module de rigidité égal ou supérieur à 1300 MPa, une couche extérieure en une matière plastique ayant un bas module de rigidité inférieur ou égal à 300 MPa, chacune des deux couches extérieures ayant une épaisseur supérieure à l'épaisseur de la couche médiane.

De préférence, le disque peut en outre comprendre, entre la couche médiane et chaque couche extérieure, une couche intermédiaire d'une matière de la même famille que la couche extérieure, mais ayant un haut module de rigidité.

Les couches intermédiaires sont avantageusement reliées par collage à la couche médiane et les couches extérieures sont reliées par calandrage à chaud aux couches intermédiaires.

La matière de la couche médiane et la matière des couches intermédiaires peuvent présenter un module de rigidité voisin, de préférence un module de rigidité compris entre 1300 et 2200 MPa.

De son côté, la matière des couches extérieures peut présenter un module de rigidité compris entre 100 et 300 MPa.

La couche médiane peut par exemple être constituée par une feuille de PET, PA, PVDC ou EVOH d'une épaisseur comprise entre 100 et 250 µm.

Chaque couche extérieure peut être constituée d'une feuille de PP élastomère d'épaisseur comprise entre 300 et 550 µm.

Chaque couche intermédiaire peut être constituée d'un film de PP d'épaisseur comprise entre 10 et 50 µm.

De préférence, les couches intermédiaires sont reliées à la couche médiane par collage à l'aide de colle de polyuréthane.

En se référant aux dessins schématiques annexés, on va décrire ci-après plus en détail un mode de réalisation illustratif et non limitatif de l'invention; sur les dessins :
la figure 1 représente un joint conforme à l'invention pour une capsule à vis pour le bouchage d'un flacon;
la figure 2 est une section fortement agrandie d'un matériau composite pour joints conformes à l'invention.

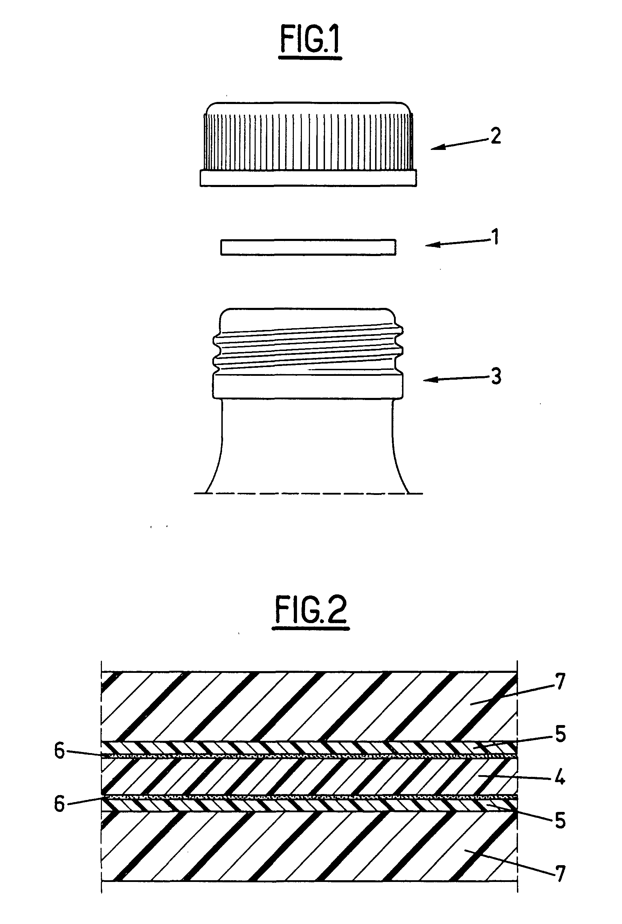

Sur la figure 2, on reconnaît un joint 1 réalisé par découpage d'un disque dans un matériau composite et rapporté dans une capsule à vis 2 pour le bouchage du goulot d'un flacon 3. Le joint 1 est réalisé en un matériau composite assumant les deux fonctions d'imperméabilité aux gaz et d'étanchéité aux liquides, de sorte que la capsule 2 peut être fabriquée par exemple par moulage par injection à partir d'une matière plastique, par exemple du polypropylène, qui peut être choisie sans tenir compte d'exigences particulières concernant l'imperméabilité aux gaz et l'étanchéité aux liquides.

Le matériau pour joint, tel qu'illustré par la figure 2 se compose d'une couche médiane 4, de deux couches intermédiaires 5 reliées aux deux faces de la couche médiane 4 par deux couches de colle 6, et de deux couches extérieures 7 reliées reliées respectivement aux couches intermédiaires 5.

La couche médiane 4 est constituée d'une feuille d'une épaisseur comprise entre 100 et 250 µm en une matière plastique à effet de barrière aux gaz, par exemple PET (poly(éthylène téréphtalate)), PA (polyamide), PVDC (poly(chlorure de vinylidène)) ou EVOH (éthylène/alcool vinylique), ayant un module de rigidité de l'ordre de 1300 à 2200 MPa.

Les couches intermédiaires 5 reliées à la couche médiane 4 par des couches 6 de colle de polyuréthane peuvent être constituées par des films d'une épaisseur de 10 à 50 µm PP (en polypropylène) à haut module de rigidité (entre 1300 et 2200 MPa).

Les couches extérieures 7 peuvent être constituées chacune d'une feuille souple, d'une épaisseur comprise entre 300 et 550µm, en polypropylène élastomère à bas module de rigidité (100 et 300 MPa), les deux couches extérieures 7 étant assemblées à chaud, par calandrage, à chaud avec le complexe multicouche comprenant la couche médiane 4 et les deux couches intermédiaires 5 reliées à la couche médiane 4 par les deux couches de colle 6.

Les différentes couches 4, 5, 7 du matériau composite pour joints présentent ainsi une structure parfaitement cohérente, malgré la combinaison d'une matière rigide à effet de barrage aux gaz et d'une matière souple à effet d'étanchéité aux liquides, cette cohésion totale permettant au matériau d'arrêter au niveau du joint conforme à l'invention réalisé à partir de ce matériau les échanges gazeux à la fois du produit conditionné vers le milieu ambiant et du milieu ambiant vers le produit conditionné.

Bien entendu, le mode de réalisation représenté et décrit n'a été donné qu'à titre d'exemple illustratif et non limitatif et de nombreuses modifications et variantes sont possibles dans le cadre de l'invention telle que définie par les revendications.

Ainsi, la couche médiane 4 unique pourrait être remplacée par exemple par plusieurs couches reliées entre elles, éventuellement en des matériaux différents.

Les couches intermédiaires 5 sont prévues pour simplifier la liaison des couches extérieures 7 avec la couche médiane 1, liaison qui peut se faire par calandrage à chaud des couches extérieures 4 sur la couche intérieure 1, grâce au doublage de cette dernière par les deux couches intermédiaires 2 constituées par une matière de la même famille que les couches extérieures 7. En variante, il serait possible de supprimer les couches intermédiaires et de relier les couches extérieures à la couche médiane directement par collage.

Par ailleurs, d'autres matières que celles indiquées ci-dessus à titre d'exemple pourraient être utilisées pour les différentes couches, à condition qu'elles présentent les unes les propriétés d'imperméabilité aux gaz et les autres les propriétés d'étanchéité aux liquides qui font que le joint composite combinant ces différentes matières et réalisé à partir de ce matériau composite réunisse ces deux propriétés apparemment contradictoires.

## Revendications

1. Joint composite de capsule (2) en matière plastique, notamment de capsule à vis, pour le bouchage de récipients (3), assurant à la fois l'étanchéité aux liquides et l'imperméabilité aux gaz, comprenant un disque (1) à structure multicouche avec une couche médiane (4) en matière plastique à effet de barrière aux gaz et deux couches extérieures (7) en matière plastique disposées de part et d'autre de ladite couche médiane, caractérisé par le fait que ledit disque (1), destiné à être rapporté dans la capsule pour assurer à lui seul l'étanchéité aux liquides et l'imperméabilité aux gaz, comprend de chaque côté d'une couche médiane (4) d'une épaisseur maximale de 250 µm, en une matière plastique ayant un haut module de rigidité égal ou supérieur à 1300 MPa, une couche extérieure (7) d'une épaisseur supérieure à l'épaisseur de la couche médiane, en une matière plastique ayant un bas module de rigidité inférieur ou égal à 300 MPa.

2. Joint suivant la revendication 1, caractérisé par le fait que le disque comprend, en outre, entre la couche médiane (4) et chaque couche extérieure (7), une couche intermédiaire (5) en une matière de la même famille que la couche extérieure, mais avec un haut module de rigidité.

3. Joint suivant la revendication 2, caractérisé par le fait que les couches intermédiaires (5) sont collées à la couche médiane (4) et que les couches extérieures (7) sont reliées par calandrage à chaud aux couches intermédiaires (5).

4. Joint suivant l'une quelconque des revendications précédentes, caractérisé par le fait que la matière des couches extérieures (7) présente un module de rigidité compris entre 100 et 300 MPa.

5. Joint suivant l'une quelconque des revendications précédentes, caractérisé par le fait que la matière de la couche médiane (4) présente un module de rigidité compris entre 1300 et 2200 MPa.

6. Joint suivant l'une quelconque des revendications précédentes, caractérisé par le fait que la couche médiane (4) est constituée d'une feuille de PET, PA, PVDC ou EVOH d'une épaisseur comprise entre 100 et 250 µm.

7. Joint suivant l'une quelconque des revendications précédentes, caractérisé par le fait que chaque couche extérieure (7) est constituée d'une feuille de PP élastomère d'une épaisseur comprise entre 300 et 550 µm.

8. Joint suivant l'une quelconque des revendication 2 à 7, caractérisé par le fait que la matière des couches intermédiaires (5) présente un module de rigidité voisin de celui de la matière de la couche médiane (4).

9. Joint suivant la revendication 7 ou 8, caractérisé par le fait que chaque couche intermédiaire (5) est constituée d'un film de PP d'une épaisseur comprise entre 10 et 50 µm.

10. Joint suivant l'une quelconque des revendications 2 à 9, caractérisé par le fait que les couches intermédiaires (5) sont reliées à la couche médiane (4) par une colle de polyuréthane.

## Patentansprüche

1. Verbunddichtung für Kapsel (2) aus Kunststoff, insbesondere für Schraubkapsel, zum Verschließen von Behältern (3), die gleichzeitig die Dichtheit gegen Flüssigkeiten und die Undurchlässigkeit von Gasen gewährleistet, mit einer Scheibe (1) mit einer Mehrschichtstruktur mit einer mittleren Schicht (4) aus Kunststoff mit Gasabsperrwirkung und zwei Außenschichten (7) aus Kunststoff, die an der einen und der anderen Seite der mittleren Schicht angeordnet sind, dadurch gekennzeichnet, dass die besagte Scheibe (1), die in die Kapsel eingelegt werden soll, um allein die Dichtheit gegen Flüssigkeiten und die Undurchlässigkeit von Gasen zu gewährleisten, auf jeder Seite einer mittleren Schicht (4) von einer Dicke von maximal 250 µm aus einem Kunststoff mit hohem Schermodul von gleich oder mehr als 1300 MPa eine Außenschicht (7) mit einer größeren Dicke als diejenige der mittleren Schicht aus einem Kunststoff mit einem niedrigen Schermodul von weniger oder gleich 300 MPa umfasst.

2. Dichtung nach Anspruch 1, dadurch gekennzeichnet, dass die Scheibe des weiteren zwischen der mittlere Schicht (4) und jeder Außenschicht (7) eine Zwischenschicht (5) aus einem Stoff der gleichen Familie wie die Außenschicht, aber mit einem hohen Schermodul umfasst.

3. Dichtung nach Anspruch 2, dadurch gekennzeichnet, dass die Zwischenschichten (5) auf die mittlere Schicht (4) geklebt sind und dass die Außenschichten (7) durch Heißglätten mit den Zwischenschichten (5) verbunden sind.

4. Dichtung nach einem der vorherigen Ansprüche, dadurch gekennzeichnet, dass der Stoff der Außenschichten (7) ein Schermodul zwischen 100 und 300 MPa aufweist.

5. Dichtung nach einem der vorherigen Ansprüche, dadurch gekennzeichnet, dass der Stoff der mittleren Schicht (4) ein Schermodul zwischen 1300 und 2200 MPa aufweist.

6. Dichtung nach einem der vorherigen Ansprüche, dadurch gekennzeichnet, dass die mittlere Schicht (4) aus einer PET-, PA, PVDC- oder EVOH-Folie mit einer Dicke zwischen 100 und 250 µm besteht.

7. Dichtung nach einem der vorherigen Ansprüche, dadurch gekennzeichnet, dass jede Außenschicht (7) aus einer PP-Elastomer-Folie mit einer Dicke zwischen 300 und 550 µm besteht.

8. Dichtung nach einem der vorherigen Ansprüche 2 bis 7, dadurch gekennzeichnet, dass der Stoff der Zwischenschichten (5) ein ähnliches Schermodul aufweist wie dasjenige des Stoffes der mittleren Schicht (4).

9. Dichtung nach Anspruch 7 oder 8, dadurch gekennzeichnet, dass jede Zwischenschicht (5) aus einer PP-Folie mit einer Dicke zwischen 10 und 50 µm besteht.

10. Dichtung nach einem der Ansprüche 2 bis 9, dadurch gekennzeichnet, dass die Zwischenschichten (5) mit einem Polyurethan-Klebstoff mit der mittleren Schicht (4) verbunden sind.

## Claims

1. A composite seal for a plastic cap (2), notably a screw cap, for the closure of receptacles (3), providing both imperviousness to liquids and impermeability to gases, comprising a disk (1) with a multilayer structure with a median layer (4) made of a plastic with the effect of a barrier to gases, and two external layers (7) made of plastic disposed either side of said median layer, characterised by the fact that said disk (1), designed to be added into the cap in order to provide, on its own, imperviousness to liquids and impermeability to gases, comprises, on each side of a median layer (4) of maximum thickness 250 µm, made of a plastic having a high modulus of rigidity equal to or greater than 1300 MPa, an external layer (7) with a thickness greater than the thickness of the median layer, made of a plastic having a low modulus of rigidity less than or equal to 300 MPa.

2. A seal according to Claim 1, characterised by the fact that the disk also comprises, between the median layer (4) and each external layer (7), an intermediate layer (5) made of a material of the same family as the external layer, but with a high modulus of rigidity.

3. A seal according to Claim 2, characterised by the fact that the intermediate layers (5) are glued to the median layer (4) and the external layers (7) are connected by hot calendering to the intermediate layers (5).

4. A seal according to any one of the previous claims, characterised by the fact that the material of the external layers (7) has a modulus of rigidity between 100 and 300 MPa.

5. A seal according to any one of the previous claims, characterised by the fact that the material of the median layer (4) has a modulus of rigidity between 1300 and 2200 MPa.

6. A seal according to any one of the previous claims, characterised by the fact that the median layer (4) is composed of a PET, PA, PVDC or EVOH sheet with a thickness between 100 and 250 µm.

7. A seal according to any one of the previous claims, characterised by the fact that each external layer (7) is composed of a PP elastomer sheet with a thickness between 300 and 550 µm.

8. A seal according to any one of Claims 2 to 7, characterised by the fact that the material of the intermediate layers (5) has a modulus of rigidity similar to that of the material of the median layer (4).

9. A seal according to Claim 7 or 8, characterised by the fact that each intermediate layer (5) is composed of a PP film with a thickness between 10 and 50 µm.

10. A seal according to any one of Claims 2 to 9, characterised by the fact that the intermediate layers (5) are connected to the median layer (4) by a polyurethane adhesive.
